Europäisches Patentamt

European Patent Office

Office européen des brevets

(11) Veröffentlichungsnummer : **0 081 161**
.B1

(12) **EUROPÄISCHE PATENTSCHRIFT**

(45) Veröffentlichungstag der Patentschrift :
05.03.86

(21) Anmeldenummer : 82110941.0

(22) Anmeldetag : 26.11.82

(51) Int. Cl.⁴ : **G 02 B 21/06,** G 02 B  6/04,
F 21 S  5/00

(54) Beleuchtungseinrichtung für Mikroskope.

(30) Priorität : 04.12.81 DE 3147998

(43) Veröffentlichungstag der Anmeldung :
15.06.83 Patentblatt 83/24

(45) Bekanntmachung des Hinweises auf die Patenterteilung : 05.03.86 Patentblatt 86/10

(84) Benannte Vertragsstaaten :
AT CH DE FR GB LI SE

(56) Entgegenhaltungen :
DE-A- 2 617 095
DE-A- 2 720 650
DE-A- 2 736 319
FR-A- 2 149 709
GB-A- 2 011 115
US-A- 3 581 140
US-A- 3 669 524
XEROX DISCLOSURE JOURNAL, Band 4, Nr. 5, Sep-
tember/Oktober 1979, Seiten 645-646 W. LAMA et al.:
"Double  aperture  stop  for  relative  illumination
control"

(73) Patentinhaber : **Firma Carl Zeiss**

**D-7920 Heidenheim (Brenz) (DE)**

(72) Erfinder : **Piller, Horst, Dr.**
**Brucknerstrasse 45**
**D-7080 Aalen (DE)**
Erfinder : **Kipper, Reinhold**
**Hegelstrasse 61**
**D-7080 Aalen (DE)**

## Beschreibung

Die vorliegende Erfindung betrifft eine Köhlersche Beleuchtungseinrichtung für Mikroskope, die einen Kollektor sowie eine Leuchtfeldblende und eine Aperturblende aufweist, wobei die Endfläche eines Glasfaserbündels als homogenisierte, flächenvergrößerte Sekundärlichtquelle dient.

Es ist seit geraumer Zeit bekannt Mikroskopbeleuchtungen unter Verwendung von Lichtleitern aufzubauen. Der Vorteil derartiger Beleuchtungen sind einmal die bequeme Handhabung und außerdem die thermische Entkopplung der vom Instrument räumlich getrennten und flexibel mit ihm verbundene Lichtquelle. Wenige faseroptische Mikroskopbeleuchtungen sind aber nach dem Köhlerschen Prinzip aufgebaut, das als Grundvoraussetzung für ein qualitativ hochwertiges Mikroskopieren gilt.

Aus der DE-OS-27 36 319 ist eine faseroptische Köhlersche Beleuchtungseinrichtung für Mikroskope bekannt, in der die Faseroptik zur Homogenisierung der Leuchtdichte in der Objektebene verwendet wird. Dazu sind lampenseitig vor dem Lichtleiter in einer zur Objektebene konjugierten Ebene radial verschiebbare Blenden oder solche mit radial verlaufender Absorption angeordnet. Diese Blendenanordnung ist sehr justierempfindlich, was sich negativ auf den Herstellungsaufwand und die Zuverlässigkeit der Beleuchtungseinrichtung auswirkt. Zur Homogenisierung der Leuchtdichte in den Aperturebenen sind keine besonderen Maßnahmen getroffen und über die räumlich konstruktive Ausgestaltung des Systems sind keine Angaben gemacht.

In der DE-OS-27 20 650 ist eine weitere Beleuchtungseinrichtung nach dem Köhlerschen Prinzip bekannt. Die Abstände zwischen Leuchte, Lampenkollektor und Lichtleitereintrittsfläche sind so gewählt, daß eine gewisse Homogenisierung der Leuchtdichteverteilung in den Pupillen des Beleuchtungsstrahlenganges eintritt. Auf die Lichtleiterendfläche folgt die bekannte Köhlersche Optik mit Kollektor, Leuchtfeldblende und Aperturblende, die wie üblich in der hinteren Brennebene des darauf folgenden Kondensors angeordnet ist.

Nun sind Durchlichtmikroskope in der Regel so aufgebaut, daß sich im Fuß des Stativs, an das das Lampengehäuse angesetzt ist, die Leuchtfeldblende befindet, während die Aperturblende direkt in der hinteren Brennebene des unter dem Objekttisch angeordneten Kondensors befindet. Bei Auflichtmikroskopen wird die Beleuchtungseinrichtung dagegen an den Tubusträger des Mikroskops angesetzt und eine Zwischenabbildung der Lichtquelle vorgenommen, in deren Ebene die Aperturblende im Lichtweg vor der Leuchtfeldblende angeordnet ist, da die hintere Brennebene des als Kondensors dienenden Objektivs im allgemeinen nicht zugänglich ist. Auflichtbeleuchtungseinrichtungen bauen daher relativ lang und erfordern eine Abstützung durch das Mikroskop, wenn auf Stabilität Wert gelegt wird. Für Auflicht- und Durchlichtbeleuchtungen wurden also bisher unterschiedliche Optiken verwendet, von denen lediglich einzelne Komponenten wie z. B. die Lampengehäuse miteinander kompatibel sind.

Es ist nun die Aufgabe der vorliegenden Erfindung, die Komponenten einer Beleuchtungseinrichtung der eingangs genannten Art in einer Beleuchtungseinrichtung der eingangs genannten Art in einer kompakten Baueinheit zusammenzufassen, die sowohl als Auflicht- als auch als Durchlichtbeleuchtungseinrichtung verwendet werden kann.

Diese Aufgabe wird durch eine Ausbildung gemäß den im Kennzeichen des Anspruchs 1 genannten Merkmalen gelöst.

Die erfindungsgemäße Anordnung der Optik, bei der die Aperturblende direkt vor der Lichtleiterendfläche angeordnet ist, hat mehrere Vorteile :

Bei Verwendung als Auflichtbeleuchtungseinrichtung tritt im Vergleich zu herkömmlichen Köhler-Beleuchtungen eine Verkürzung ein, da das starr angeflanschte Lampengehäuse mit einem mehrlinsigen, stark vergrößernden Kollektor und der Optik zur Zwischenabbildung der Lichtquelle wegfällt. Die Beleuchtungseinrichtung kann somit ohne zusätzliche Abstützung durch das Stativ direkt an den Tubusträger des Mikroskops angesetzt werden.

Im Durchlichtfall kann das Kondensorgehäuse sehr viel einfacher gestaltet werden, da dort keine Aperturblende mehr vorgesehen werden braucht, deren Betätigung wegen der räumlichen Anordnung des Kondensors direkt unter dem Tisch des Mikroskops für den Benutzer stets unbequem war. Zudem wird die Möglichkeit eröffnet, gängige Objektive, deren Gehäuse keine Aperturirisblende enthält, als Kondensoren mit einstellbarer Apertur einzusetzen. Dieser Fall ist insbesondere für die Durchlichtphotometrie interessant.

Die Homogenisierung der Leuchtdichte der Endfläche des Lichtleiters wird einfach durch einen Glaskörper erzielt, in dem sich die Einzellintensitäten der aus den Fasern austretenden Lichtbündel statistisch überlagern. Mit dieser Lösung wird ein höchst einfacher Aufbau der Beleuchtungseinrichtung erzielt.

In Bezug auf die Umrüstbarkeit eines Mikroskops von Durchlicht- auf Auflichtbeleuchtung sind bei Verwendung der erfindungsgemäßen Einrichtung nur minimale Forderungen an das Stativ des Mikroskops zu stellen, das neben einem Kondensor keine weiteren Beleuchtungskomponenten zu enthalten braucht. Die Umrüstung erfolgt durch Abnehmen der Beleuchtungseinrichtung von der Kondensorhalterung und Ansetzen an den Tubusträger.

Zweckmäßig wird die vor der Lichtleiterfläche angeordnete Aperturblende in bekannter Weise als Aperturirisblende mit variablen Durchmesser ausgebildet. Es ist außerdem möglich, die zur Erzielung eines Phasenkontrastes nötigen Ringblenden — auch auswechselbar — in dieser Ebene anzuordnen. Denn da der Durchmesser dieser als Sekundärlichtquelle dienenden Lichtleiterendfläche sehr viel größer ist als die Wendel einer herkömmlichen Mikroskopierleuchte kann ein Kollektor mit relativ langer Brennweite verwendet werden, dessen Abbildungsleistung eine ausreichend genaue Abbildung der Ringblenden auf die Phasenringe in der Brennebene des Objektivs gewährleistet.

Ordnet man die Aperturblende radial verschiebbar vor dem Lichtleiter an, so läßt sich eine sogenannte « schiefe Beleuchtung » realisieren, bei der das beobachtete Objekt einen Reliefeffekt zeigt.

Weiterhin ist es vorteilhaft das Lichtleiterende evtl. mit dem Glaskörper auswechselbar im Gehäuse der Beleuchtungseinrichtung zu befestigen. Es können dann beliebige faseroptische Kaltlichtquellen, die zu den verschiedensten Zwecken und in unterschiedlicher Qualität auf dem Markt angeboten werden, als Lichtquelle Verwendung finden.

So kann eine Faseroptik verwendet werden, die als Querschnittswandler wirkt, auf deren Lichteintrittsseite beispielsweise die Fasern rechteckig gepackt sind und an den Austrittsspalt eines Monochromators angepaßt sind, während die Lichtaustrittsfläche des Faserbündels den für das Mikroskopieren üblichen, kreisförmigen Querschnitt besitzt.

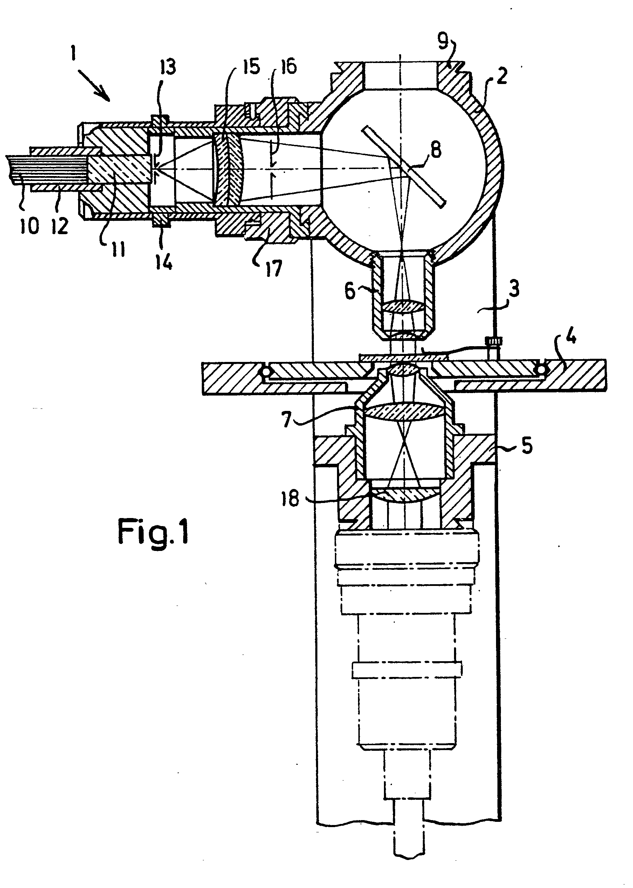

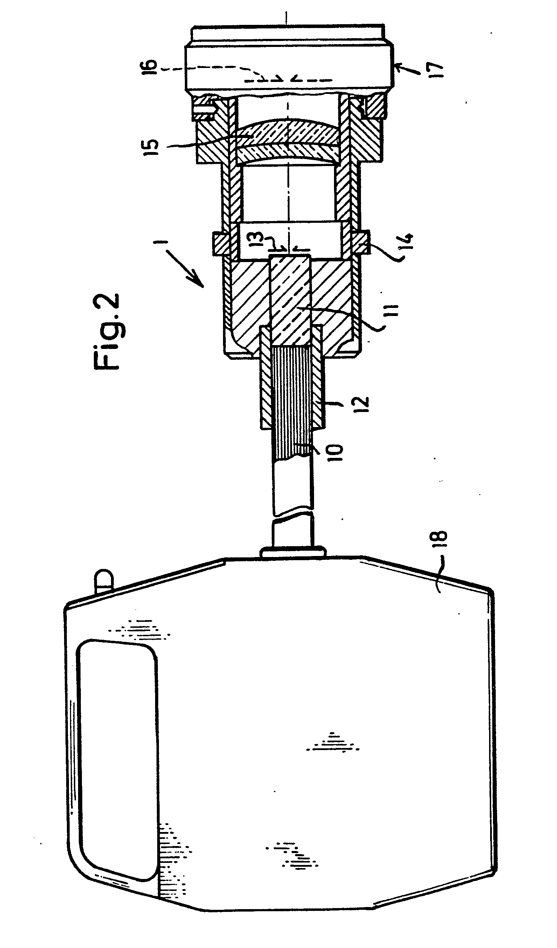

Nachstehend wird die Erfindung anhand der Fig. 1 und 2 der beigefügten Zeichnungen näher erläutert :

Figur 1 stellt eine Schnittzeichnung der wesentlichen Komponenten eines Mikroskops dar, das wahlweise im Durchlicht- oder Auflichtbetrieb arbeitet.

Figur 2 stellt eine Schnittzeichnung durch ein Ausführungsbeispiel der erfindungsgemäßen Beleuchtungseinrichtung dar.

Das in Fig. 1 dargestellte Mikroskop besteht aus einem Stativträger 3, der den Tubusträger 2 mit dem Objektiv 6, den Objekttisch 4 sowie den Halter 5 für einen Kondensor 7 trägt.

Der Tubusträger 2 besitzt eine Ringschwalbe 9, an der beispielsweise ein nicht dargestellter Binokulartubus befestigt werden kann, sowie einen Teilerspiegel 8, der das von der Beleuchtungseinrichtung 1 gelieferte Licht durch das Objektiv auf das darunter befindliche Objekt lenkt. Die Beleuchtungseinrichtung 1 ist ebenfalls mit einer Ringschwalbe am Tubusträger 2 befestigt und kann abgenommen werden um, wie die gestrichelte Darstellung andeutet, als Durchlichtbeleuchtungseinrichtung an den Halter 5 des Kondensors 7 angesetzt zu werden. Mit 18 ist eine unterhalb des Kondensors 7 angeordnete Hilfslinse bezeichnet, die zur Verkürzung der Schnittweite der Beleuchtungseinrichtung 1 dient.

Wie Fig. 2 zeigt besteht die Beleuchtungseinrichtung 1 aus einem Gehäuse, das über ein Glasfaserkabel 10 mit einer Kaltlichtquelle 18 bekannter Bauart verbunden ist. Das Ende des Glasfaserkabels 10 ist von einer Hülse 12 umgeben, in die ein Glaskörper 11 gesteckt ist. Glasfaserkabel, Hülse und Glaskörper sind auswechselbar im Gehäuse der Beleuchtungseinrichtung 1 befestigt.

Direkt vor der Stirnfläche des zylindrischen Glaskörpers 11 ist eine Aperturirisblende 13 angeordnet, die mittels eines Ringes 14 betätigt werden kann. Die Bewegungsmechanik zwischen Ring und Blende ist der Einfachheit halber nicht dargestellt.

Auf die Aperturirisblende 13 folgt ein Kollektor 15, der die Blende 13 in die hintere Brennebene des Objektivs 6 bzw. mit Hilfe der Linse 18 in die Brennebene des Kondensors 7 abbildet. Die über einen zweiten Ring 17 betätigbare Irisblende 16 dient als Leuchtfeldblende und wird vom Objektiv 6 bzw. Kondensor 7 in die Objektebene abgebildet.

## Patentansprüche

1. Köhlersche Beleuchtungseinrichtung für Mikroskope, die einen Kollektor (15) sowie eine Leuchtfeldblende (16) und eine Aperturblende (13) aufweist, wobei die Endfläche eines Glasfaserbündels als homogenisierte, flächenvergrößerte Sekundärlichtquelle dient, dadurch gekennzeichnet, daß auf das Ende des Glasfaserbündels (10) ein Glaskörper (11) zur Homogenisierung der Leuchtdichteverteilung aufgesetzt ist, daß die Aperturblende (13) in unmittelbarer Nähe der Lichtaustrittsfläche des Glaskörpers (11) angeordnet ist, und daß die genannten Teile (11, 12, 15, 16) in einem Gehäusestutzen angeordnet sind, der an den Tubusträger (2) eines Auflichtmikroskops oder an den Halter (5) des Kondensors (7) eines Durchlichtmikroskops ansetzbar ist.

2. Beleuchtungseinrichtung nach Anspruch 1, dadurch gekennzeichnet, daß der Durchmesser der Aperturblende (13) variabel ist.

3. Beleuchtungseinrichtung nach Anspruch 1, dadurch gekennzeichnet, daß die Aperturblende (13) die Form einer Ringblende besitzt.

4. Beleuchtungseinrichtung nach Anspruch 1-2, dadurch gekennzeichnet, daß die Aperturblende (13) radial verschiebbar ist.

5. Beleuchtungseinrichtung nach Anspruch 1-4, dadurch gekennzeichnet, daß das Lichtleiterende (10) bzw. der Glaskörper (11) auswechselbar im Gehäuse (1) befestigt sind.

6. Beleuchtungseinrichtung nach Anspruch 1-5, dadurch gekennzeichnet, daß die Lichtaustrittsfläche des Lichtleiters (10) rund ist, der Glaskörper (11) Zylinderform besitzt und die Lichteintrittsfläche des Lichtleiters eine von der Kreisform abweichende Geometrie besitzt.

## Claims

1. A Köhler illuminating device for microscopes, comprising a collector (15), a field diaphragm (16) and an aperture diaphragm (13), wherein the end surface of a glass fiber bundle serves as a uniform, increased-area source of secondary light, characterized by the fact that a glass body (11) is engaged against said end surface of the glass fiber bundle (10) for producing a uniform luminous density distribution, that the aperture diaphragm (13) is arranged in the immediate vicinity of the light exit surface of said glass body, and that the parts (11, 12, 15, 16) cited are arranged in a housing being attachable to the tube carrier (2) of a microscope for incident illumination or to the condensor (7) holder (5) of a microscope for translucent illumination.

2. A Köhler illuminating device according to claim 1, characterized by the fact that the diameter of the aperture diaphragm (13) is variable.

3. A Köhler illuminating device according to claim 1, characterized by the fact that the aperture diaphragm (13) has the form of an annular diaphragm.

4. A Köhler illuminating device according to claim 1-2, characterized by the fact that the aperture diaphragm (13) is radially displaceable.

5. A Köhler illuminating device according to claim 1-4, characterized by the fact that the lightguide end (10) or the glass body (11) are replaceably fastened in said housing (1).

6. A Köhler illuminating device according to claim 1-5, characterized by the fact that the light exit surface of the light guide (10) is round, said glass body (11) is of cylindrical shape, and the light guide has a light entrance surface with a cross-sectional shape other than circular.

## Revendications

1. Dispositif d'éclairage selon Köhler pour microscopes, qui possède un collecteur (15) ainsi qu'un diaphragme de champ (16) et un diaphragme d'ouverture (13) et dans lequel la face extrême d'un faisceau de fibres de verre sert de source lumineuse secondaire homogénéisée, à aire agrandie, caractérisé en ce qu'un corps de verre (11) est placé sur l'extrémité du faisceau de fibres de verre (10) pour homogénéiser la distribution de la luminance, que le diaphragme d'ouverture (13) est disposé à proximité immédiate de la face de sortie de la lumière du corps de verre (11) et que les éléments (11, 12, 15, 16) mentionnés sont logés dans une tubulure formant monture qui peut être fixée au porte-tube (2) d'un microscope à éclairage incident ou au support (5) du condenseur (7) d'un microscope à éclairage par transparence.

2. Dispositif selon la revendication 1, caractérisé en ce que le diamètre du diaphragme d'ouverture (13) est variable.

3. Dispositif selon la revendication 1, caractérisé en ce que le diaphragme d'ouverture (13) a la forme d'un diaphragme circulaire.

4. Dispositif selon la revendication 1 ou 2, caractérisé en ce que le diaphragme d'ouverture (13) est déplaçable radialement.

5. Dispositif selon une des revendications 1 à 4, caractérisé en ce que l'extrémité du guide de lumière (10) et le corps de verre (11) sont fixés interchangeables dans la monture (1).

6. Dispositif selon une des revendications 1 à 5, caractérisé en ce que la face de sortie de la lumière du guide de lumière (10) est circulaire, le corps de verre (11) possède une forme cylindrique et la face d'entrée de la lumière du guide de lumière possède une forme autre que circulaire.

Fig.1

Fig.2